# EUROPÄISCHE PATENTSCHRIFT

(11) **EP 1 646 772 B1**
(45) Veröffentlichungstag und Bekanntmachung des Hinweises auf die Patenterteilung: **23.07.2008**
(21) Anmeldenummer: 04762351.7
(22) Anmeldetag: 07.07.2004
(51) Int. Cl.: F02B 23/10, F02M 61/18

(54) **BRENNSTOFFEINSPRITZSYSTEM**
FUEL INJECTION SYSTEM
SYSTEME D'INJECTION DE CARBURANT

(30) Priorität: 10.07.2003 DE 10331267
(43) Veröffentlichungstag der Anmeldung: 19.04.2006
(73) Patentinhaber: ROBERT BOSCH GMBH, 70442 Stuttgart (DE)
(72) Erfinder: GANSERT, Klaus-Peter, 71665 Vaihingen/Enz (DE); STORCH, Axel, 71696 Moeglingen (DE); KOEHLER, Robert, 75378 Bad Liebenzell/Monakam (DE); BOTTE, Jens, 71229 Leonberg (DE)
(74) Vertreter: Körfer, Thomas
(86) Internationale Anmeldenummer: PCT/DE2004/001453
(87) Internationale Veröffentlichungsnummer: WO 2005/008039

(56) Entgegenhaltungen:
- DE-A- 4 140 962
- DE-A- 10 026 321
- DE-A- 19 714 796
- US-A- 4 492 194
- US-A- 4 721 081
- PATENT ABSTRACTS OF JAPAN Bd. 2002, Nr. 08, 5. August 2002 (2002-08-05) -& JP 2002 106353 A (MAZDA MOTOR CORP), 10. April 2002 (2002-04-10)
- PATENT ABSTRACTS OF JAPAN Bd. 0050, Nr. 39 (M-059), 14. März 1981 (1981-03-14) -& JP 55 164723 A (NISSAN MOTOR CO LTD), 22. Dezember 1980 (1980-12-22)

## Beschreibung

### Stand der Technik

Die Erfindung geht aus von einem Brennstoffeinspritzsystem nach der Gattung des Hauptanspruchs.

Beispielsweise ist aus der DE 100 26 321 A1 ein Brennstoffeinspritzsystem mit einem Brennstoffeinspritzventil und einer in einen Brennraum ragenden Zündeinrichtung bekannt. Die aus dem Brennstoffeinspritzventil austretenden Brennstoffstrahlen spannen einen Brennstoffkegel auf. Der Brennstoffkegel weist dabei im Bereich der Zündkerze, welche relativ nahe neben dem Brennstoffeinspritzventil angeordnet ist, einen Winkelausschnitt auf. Durch den Winkelausschnitt können zwei Brennstoffstrahlen in genau definiertem Abstand die Zündeinrichtung passieren, wodurch eine sichere Zündung des Brennstoffes gewährleistet werden soll.

Nachteilig bei dem aus der obengenannten Druckschrift bekannten Brennstoffeinspritzsystem ist insbesondere, daß das Brennstoffeinspritzventil mit großem Aufwand montiert werden muß, um den Winkelausschnitt zur Zündkerze genau auszurichten. Ebenso muß die Zündeinrichtung, bzw. die Anordnung der Pole bzw. Elektroden, so montiert werden, daß sie zum Brennstoffeinspritzventil eine genaue definierte Lage einnimmt. Die Lage des Zündfunkens einer Zündeinrichtung und die Lage und Geometrie des Strahlenbilds des Brennstoffeinspritzventils dürfen sich über die gesamte Lebensdauer des Brennstoffeinspritzsystems nur sehr wenig verändern, um beispielsweise Zündaussetzer zu vermeiden.

DE 197 14 796 A1 offenbart ein Verfahren und eine Vorrichtung zur Entflammung sehr magerer Kraftstoff-LuftGemische in Ottomotoren. Dabei wird die lokale Anreicherung des im Brennraum vorhandenen sehr mageren und weitgehend homogenen Grundgemischs mit Kraftstoff entweder durch eine gezielte Steuerung der Saugrohreinspritzung oder durch Direkteinspritzung einer kleinen Kraftstoffmenge in den Brennraum in Richtung auf eine kleine Kolbenmulde deutlich vor dem Zündzeitpunkt erzeugt. Unmittelbar vor dem Zündzeitpunkt taucht die Funkenzündeinrichtung in die Kolbenmulde ein und zündet das dort angesammelte mit Kraftstoff angereicherte Gemisch.

### Vorteile der Erfindung

Das erfindungsgemäße Brennstoffeinspritzventil mit den kennzeichnenden Merkmalen des Hauptanspruchs hat demgegenüber den Vorteil, dass insbesondere die Montage des Brennstoffeinspritzsystems erheblich vereinfacht ist.

Insbesondere muss die Zündeinrichtung, bzw. die Anordnung der Pole bzw. Elektroden, bei der Montage nicht aufwendig relativ zum Brennstoffeinspritzventil ausgerichtet werden.

Auch das Brennstoffeinspritzventil muss nicht durch Drehung um die Längsachse aufwendig ausgerichtet werden.

Die Einragtiefe der Zündeinrichtung in den Brennraum ist reduziert, wodurch beispielsweise die thermische Belastung der Zündeinrichtung, insbesondere der Pole vermindert ist.

Die Größe der Zündeinrichtung ist skalierbar und der Strahlkegel wird am äußeren Mantel entflammt.

Durch die in den Unteransprüchen aufgeführten Maßnahmen sind vorteilhafte Weiterentwicklungen des im Hauptanspruch angegebenen Brennstoffeinspritzsystems möglich.

Vorteilhafterweise besteht das Ende des ersten Pols und das Ende des zweiten Pols zumindest teilweise aus einem Edelmetall, insbesondere aus einer Platinlegierung. Der Zündfunke entsteht dadurch in sicherer Weise nur zwischen den beiden Enden, ohne aus dem Bereich der Pole, bzw. Elektroden getragen zu werden. Der Brennstoff kann dadurch sicherer gezündet werden, da wenig Energie an die Elektroden in Form von Wärme abgegeben wird, wie dies beispielsweise bei unerwünschten so genannten Gleitfunken der Fall ist.

Von Vorteil ist es außerdem, wenn der Durchmesser der Enden des ersten Pols und des zweiten Pols weniger als einen Millimeter betragen und/oder der Abstand des Endes des ersten Pols zum Ende des zweiten Pols weniger als einen Millimetern beträgt. Auch dadurch wird sichergestellt, daß der Funke an gleichbleibend gleicher Stelle zwischen den Polen entsteht und dort während des Zündvorgangs bleibt.

In einer weiteren Weiterbildung des erfindungsgemäßen Brennstoffeinspritzventils beträgt der Abstand des zweiten Pols vom Kegelmantel zwischen 0,5 mm und 3 mm. Dadurch wird eine sichere Zündung gewährleistet und die thermische Belastung der Zündeinrichtung wird durch die damit ergebende Anordnung der Zündeinrichtung wesentlich reduziert, was zu längeren Standzeiten und Wechselintervallen führt.

Durch die sich gestuft zum Brennraum hin aufweitenden Abspritzöffnungen wird die Bildung von Ablagerungen, die die Geometrie des abgespritzten Brennstoffs unerwünscht beeinflussen können, vermindert bzw. verhindert.

Durch die Verwendung einer Mehrlochscheibe, in der die Abspritzöffnungen angeordnet sind, kann das Brennstoffeinspritzventil und somit das Brennstoffeinspritzsystem wesentlich einfacher aufgebaut werden.

### Zeichnung

Ein Ausführungsbeispiel der Erfindung sind in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäß ausgestalteten Brennstoffeinspritzsystems,
- Fig. 2: einen schematischen Schnitt durch das Ausführungsbeispiel des erfindungsgemäßen Brennstoffeinspritzsystems entlang der Linie II-II in Fig. 1,
- Fig. 3: einen schematischen Schnitt durch das abspritzseitige Ende eines Brennstoffeinspritzventils eines erfindungsgemäßen Brennstoffeinspritzsystems,
- Fig. 4: eine schematische Darstellung des in den Brennraum ragenden Endes einer Zündeinrichtung eines erfindungsgemäßen Brennstoffeinspritzsystems,
- Fig. 5: ein schematisch dargestelltes Strahlenbild eines einen Kegelmantel erzeugenden Brennstoffeinspritzventils eines erfindungsgemäßen Brennstoffeinspritzsystems,
- Fig. 6: einen schematischen Schnitt durch ein weiteres Ausführungsbeispiel eines erfindungsgemäß ausgestalteten Brennstoffeinspritzsystems und
- Fig. 7: ein schematisch dargestelltes Strahlenbild eines einen Teilkegelmantel erzeugenden Brennstoffeinspritzventils eines Brennstoffeinspritzsystems.

### Beschreibung des Ausführungsbeispiels

Nachfolgend wird ein Ausführungsbeispiel der Erfindung beispielhaft beschrieben. Übereinstimmende Bauteile sind dabei in den Figuren mit übereinstimmenden Bezugszeichen versehen.

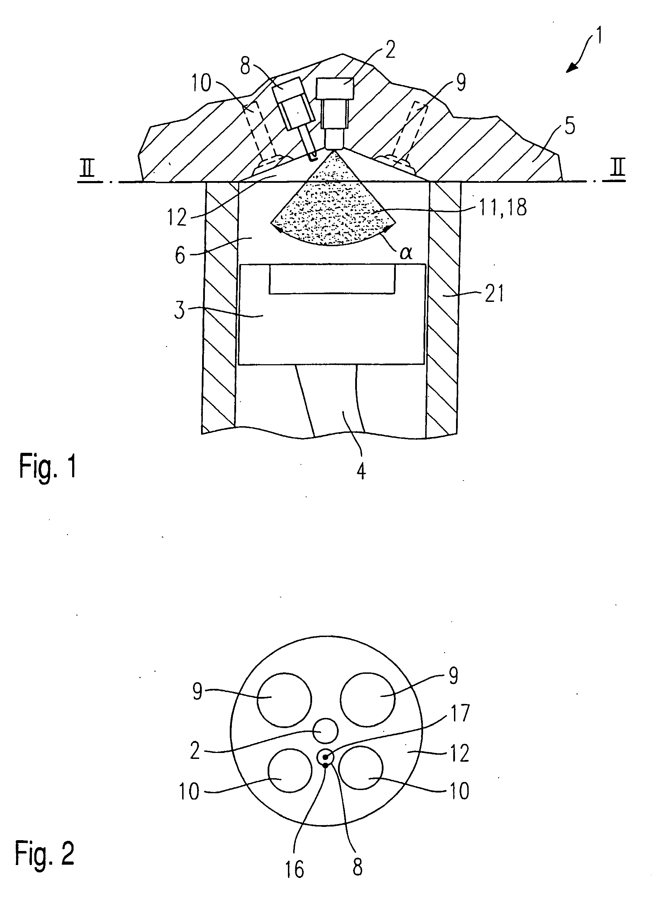

Ein in Fig. 1 dargestelltes Ausführungsbeispiel eines erfindungsgemäßen Brennstoffeinspritzsystems 1 ist in der dargestellten Form für gemischverdichtende, fremdgezündete Brennkraftmaschinen mit innerer Gemischbildung und Verbrennung und strahlgeführtem Brennverfahren ausgeführt.

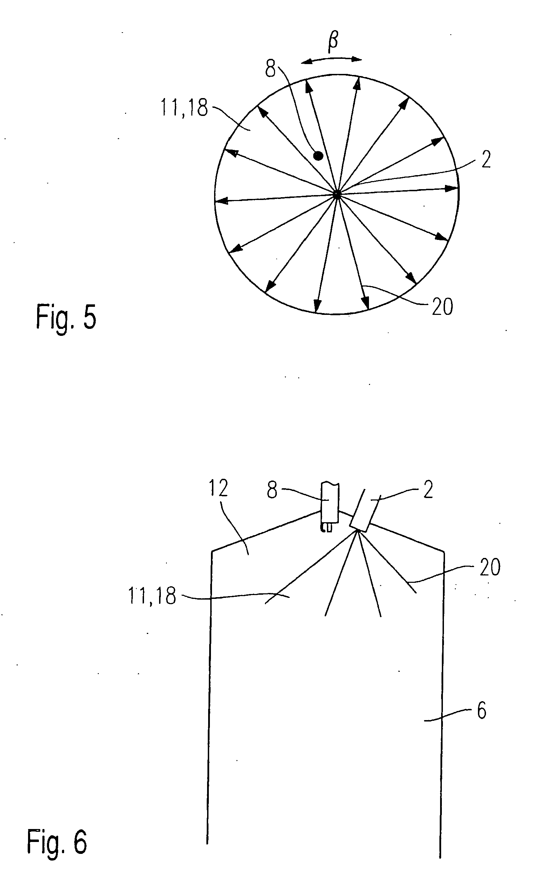

Das Brennstoffeinspritzsystem 1 umfaßt in diesem Ausführungsbeispiel einen Zylinder 21, in welchem ein Kolben 3 geführt ist. Der Kolben 3 ist einerseits mit einer Pleuelstange 4 verbunden und grenzt andererseits an einen Brennraum 6. Der Brennraum 6 wird außerdem durch den Zylinder 21 und einen Zylinderkopf 5 begrenzt, welcher auf der der Pleuelstange 4 abgewandten Seite des Zylinders 21 angeordnet ist. Der Zylinderkopf 5 weist eine kegelförmige, sich zum Zylinder 21 hin erweiternde Ausnehmung 12 auf, welche einen Teil des Brennraums 6 formt. In der Ausnehmung 12 koaxial angeordnet befindet sich ein mit seinem abspritzseitigen Ende in den Brennraum 6 ragendes Brennstoffeinspritzventil 2. Aus dem abspritzseitigen Ende des Brennstoffeinspritzventils 2, in Fig. 5 schematisch dargestellte, austretende Brennstoffstrahlen 20 spreizen einen kegelmantelförmigen Brennstoffächer 11 mit einem Mantelöffnungswinkel α auf, welcher vorzugsweise 70 bis 110 Grad beträgt. Relativ nahe, etwas seitlich versetzt zum abspritzseitigen Ende des Brennstoffeinspritzventils 2, ragt eine Zündeinrichtung 8 soweit in den Brennraum 6 bzw. in die Ausnehmung 12, daß zu einem einen Kegelmantel 18 bildenden Brennstoffächer 11 ein Abstand von vorzugsweise 0,5 mm bis 3 mm verbleibt. Das im Brennraum 6 entstehende Brennstoff/Luft-Gemisch wird durch die Zündeinrichtung 8 gezündet.

Im Zylinderkopf 5 sind außerdem noch zumindest ein Auslaßventil 10 und zumindest ein Einlaßventil 9 angeordnet.

Fig. 2 zeigt einen schematischen Schnitt durch das Ausführungsbeispiel des erfindungsgemäßen Brennstoffeinspritzsystems 1 entlang der Linie II-II in Fig. 1. Deutlich erkennbar ist die zentrierte Lage des Brennstoffeinspritzventils 2 in der Ausnehmung 12 sowie die dazu in kurzem Abstand seitlich versetzte Lage der Zündeinrichtung 8. Der erste Pol 16 befindet sich in dieser Darstellung auf der dem Brennstoffeinspritzventil 2 abgewandten Seite des zweiten Pols 17. Aufgrund der erfinderischen Maßnahmen ist die Lage des ersten Pols 16 jedoch unerheblich, wodurch sich der Einbau der Zündeinrichtung 8 vereinfacht. Wird die Zündeinrichtung 8 beispielsweise in den Zylinderkopf 5 eingeschraubt, so muß die Lage der Zündeinrichtung 8, bzw. des ersten Pols 16, bei der Montage nicht aufwendig kontrolliert werden und die Gewinde an Zylinderkopf 5 und Zündeinrichtung 8 müssen nicht mit hohen Fertigungstoleranzen hergestellt werden. Außerdem ist kein definierter Befestigungsort des Pols 16 an der Zündeinrichtung 8 erforderlich.

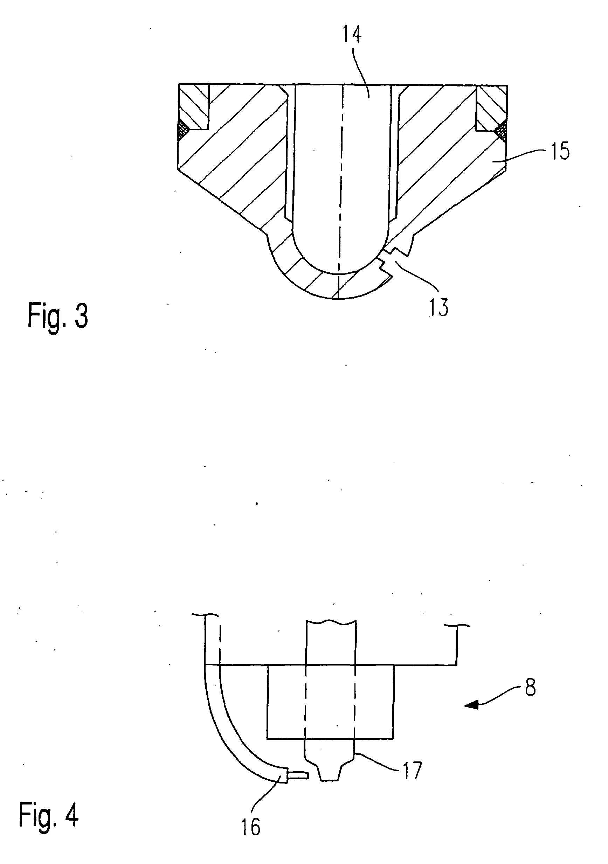

Fig. 3 zeigt einen schematischen Schnitt durch das abspritzseitige Ende eines Brennstoffeinspritzventils 2 eines erfindungsgemäßen Brennstoffeinspritzsystems 1 mit einem Ventilsitzkörper 15, einer Ventilnadel 14 und Abspritzöffnungen 13 von denen nur eine dargestellt ist. Die Abspritzöffnungen 13 weiten sich gestuft zum Brennraum 6 hin auf. Dadurch wird die Bildung von Ablagerungen im Bereich der Abspritzöffnung 13 verhindert bzw. vermindert.

Fig. 4 zeigt eine schematische Darstellung des in den Brennraum 6 ragenden Endes einer Zündeinrichtung 8 eines erfindungsgemäßen Brennstoffeinspritzsystems 2. Das Ende des zumindest einen ersten Pols 16 ist seitlich neben dem in den Brennraum 6 ragenden Ende des zweiten Pols 17 angeordnet, wobei beide Enden auf etwa gleicher Höhe der Längsachse der Zündeinrichtung 8 liegen. Beide Enden bestehen vorzugsweise aus einer Platinlegierung, um den Zündfunken während des gesamten Zündvorgangs zwischen den Enden der Pole 16, 17 zu halten. Vorzugsweise betragen die Durchmesser der Enden und deren Abstand zueinander weniger als 1 mm.

Fig. 5 zeigt ein schematisch dargestelltes Strahlenbild eines einen Kegelmantel erzeugenden Brennstoffeinspritzventils 2 eines erfindungsgemäßen Brennstoffeinspritzsystems 1. Die Brennstoffstrahlen 20 des zu einem Kegelmantel 18 gleichmäßig aufgespannten Brennstoffächers 11 weisen zum jeweils benachbarten Brennstoffstrahl 20 einen Öffnungswinkel β von ca. 25 Grad auf. Vorzugsweise kann der Öffnungswinkel β in anderen Ausführungsbeispielen zwischen 25 und 45 Grad liegen, wobei die einzelnen Öffnungswinkel β, der vorzugsweise 4 bis 12 durch jeweils eine Abspritzöffnung 13 erzeugten Brennstoffstrahlen 20, voneinander abweichen können.

Die Lage der Zündeinrichtung 8 relativ zum abspritzseitigen Ende des Brennstoffeinspritzventils 2 liegt im dargestellten Ausführungsbeispiel etwa zwischen zwei Brennstoffstrahlen 20, wobei die Lage der Brennstoffstrahlen 20 relativ zur Zündeinrichtung 8 durch die erfindungsgemäßen Maßnahmen beliebig sein können, beispielsweise kann so der Brennstoffstrahl 20 auch genau über der Zündeinrichtung 8 verlaufen. Wie bei der Montage der Zündeinrichtung 8, ist dadurch der Einbau des Brennstoffeinspritzventils 2 erheblich vereinfacht. Wird das Brennstoffeinspritzventils 2 beispielsweise in den Zylinderkopf 5 eingeschraubt, so muß die Lage Brennstoffeinspritzventils 2 bei der Montage nicht aufwendig kontrolliert werden und die Gewinde an Zylinderkopf 5 und Brennstoffeinspritzventils 2 müssen nicht mit hohen Fertigungstoleranzen hergestellt werden. Vorzugsweise liegt die Anzahl der durch jeweils eine Abspritzöffnung 13 erzeugten Brennstoffstrahlen 20 zwischen 4 und 12.

Fig. 6 zeigt einen schematischen Schnitt durch ein weiteres Ausführungsbeispiel eines erfindungsgemäß ausgestalteten Brennstoffeinspritzsystems 1, ähnlich dem Ausführungsbeispiel aus Fig. 1. Jedoch ist die Zündeinrichtung 8 koaxial bzw. am höchsten Punkt der Ausnehmung 12 angeordnet. In diesem Ausführungsbeispiel ist die Zündeinrichtung 8 damit auch koaxial zum Brennraum 6 angeordnet. Relativ nahe, etwas seitlich versetzt zur Zündeinrichtung 8 ragt das abspritzseitige Ende des Brennstoffeinspritzventils 2 soweit in die Ausnehmung 12, daß zu dem Kegelmantel, daß zum Kegelmantel 18 ein Abstand von vorzugsweise 0,5 bis 3 mm verbleibt.

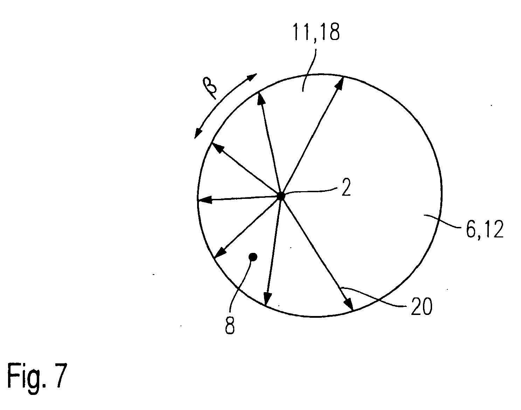

Fig. 7 zeigt ein schematisch dargestelltes Strahlenbild eines einen Teilkegelmantel erzeugenden Brennstoffeinspritzventils eines Brennstoffeinspritzsystems. Der aus dem nicht koaxial aus dem Brennstoffeinspritzventil 2 tretende Brennstoffächer 11 bzw. Kegelmantel 18, welcher in diesem Ausführungsbeispiel nur teilweise, nämlich zu einem Teilkegelmantel, ausgebildet wird, weist 7 Brennstoffstrahlen 20 auf, die zueinander jeweils gleiche Öffnungswinkel β von 40 Grad aufweisen. In anderen Ausführungsbeispielen können die Öffnungswinkel β zwischen den Brennstoffstrahlen 20 auch, je nach den im Brennraum 6 ablaufenden Vorgängen, unterschiedlich gewählt werden. Die Lage des abspritzseitige Ende des Brennstoffeinspritzventils 2, welches in den Brennraum 6 ragt, ist außerhalb des Mittelpunktes der Querschnittsebene des Brennraums 6, ebenso wie die Lage des abspritzseitigen Endes der Zündeinrichtung 8.

Die Erfindung ist nicht auf das dargestellte Ausführungsbeispiel beschränkt und z. B. für beliebige Brennkraftmaschinen mit Brennstoffeinspritzung verwendbar.

## Patentansprüche

1. Brennstoffeinspritzsystem (1) mit einem Brennstoffeinspritzventil (2) mit mehreren Abspritzöffnungen (13), das Brennstoff in einen Brennraum (6) einer Brennkraftmaschine einspritzt, und mit einer in den Brennraum (6) ragenden Zündeinrichtung (8) mit zumindest einem ersten Pol (16) und einem zweiten Pol (17),
**dadurch gekennzeichnet,**
**dass** die aus den Abspritzöffnungen (13) austretenden Brennstoffstrahlen (20) unterhalb dem Bereich der Zündeinrichtung (8) einen zu einem Kegelmantel (18) gleichmäßig aufgespannten Brennstofffächer (11) bilden, und
**dass** das Ende des zumindest einen ersten Pols (16) seitlich neben dem Ende des zweiten Pols (17) angeordnet ist und beide Enden auf etwa gleicher Höhe der Längsachse der Zündeinrichtung (8) liegen.

2. Brennstoffeinspritzsystem nach Anspruch 1,
**dadurch gekennzeichnet,**
**dass** das Ende des ersten Pols (16) und des zweiten Pols (17) zumindest teilweise aus einem Edelmetall, insbesondere einer Platinlegierung, bestehen.

3. Brennstoffeinspritzsystem nach Anspruch 1 oder 2,
**dadurch gekennzeichnet,**
**dass** der Durchmesser des Endes des ersten Pols (16) und des zweiten Pols (17) weniger als 1 Millimeter betragen.

4. Brennstoffeinspritzsystem nach einem der vorangegangenen Ansprüche,
**dadurch gekennzeichnet,**
**dass** der Abstand des Endes des ersten Pols (16) vom Ende des zweiten Pols (17) weniger als 1 Millimeter beträgt.

5. Brennstoffeinspritzsystem nach einem der vorangegangenen Ansprüche,
**dadurch gekennzeichnet,**
**dass** der Abstand des zweiten Pols (17) vom durch die Brennstoffstrahlen (20) gebildeten Kegelmantel(18) zwischen 0,5 mm und 3 mm beträgt.

6. Brennstoffeinspritzsystem nach einem der vorangegangenen Ansprüche,
**dadurch gekennzeichnet,**
**dass** die Brennstoffstrahlen (20) den Brennstofffächer (11) gleichmäßig aufspreizen, wobei die Brennstoffstrahlen (20) insbesondere zueinander gleiche Öffnungswinkel (ss) aufweisen.

7. Brennstoffeinspritzsystem nach Anspruch 6,
**dadurch gekennzeichnet,**
**dass** der Öffnungswinkel (ss) zwischen 25 Grad und 45 Grad beträgt.

8. Brennstoffeinspritzsystem nach einem der vorangegangenen Ansprüche,
**dadurch gekennzeichnet,**
**dass** die Abspritzöffnungen (13) sich gestuft zum Brennraum (6) aufweiten.

9. Brennstoffeinspritzsystem nach einem der vorangegangenen Ansprüche,
**dadurch gekennzeichnet,**
**dass** die Anzahl der Abspritzöffnungen (13) mindestens 4 und höchstens 12 beträgt.

10. Brennstoffeinspritzsystem nach einem der vorangegangenen Ansprüche,
**dadurch gekennzeichnet,**
**dass** die Abspritzöffnungen (13) in einer Mehrlochscheibe des Brennstoffeinspritzventils (2) angeordnet sind.

11. Brennstoffeinspritzsystem nach einem der vorangegangenen Ansprüche,
**dadurch gekennzeichnet,**
**dass** der Brennstofffächer (11) einen Mantelöffnungswinkel (a) von 70 Grad bis 110 Grad aufweist.

12. Brennstoffeinspritzsystem nach einem der vorangegangenen Ansprüche,
**dadurch gekennzeichnet,**
**dass** der Brennstofffächer (11) zur Längsachse des Brennstoffeinspritzventils (2) koaxial verläuft.

13. Brennstoffeinspritzsystem nach einem der Ansprüche 1 bis 11,
**dadurch gekennzeichnet,**
**dass** die Längsachse des Brennstofffächers (11) zur Längsachse des Brennstoffeinspritzventils (2) einen von Null verschiedenen Winkel einschließt.

## Claims

1. Fuel injection system (1) having a fuel injection valve (2) with a plurality of ejection openings (13), which fuel injection system (1) injects fuel into a combustion chamber (6) of an internal combustion engine, and having an ignition device (8) which protrudes into the combustion chamber (6) and has at least one first pole (16) and one second pole (17), **characterized in that** the fuel jets (20) which emerge from the ejection openings (13) form a fuel fan (11) which is stretched uniformly to form a cone envelope (18) below the region of the ignition device (8), and **in that** the end of the at least one first pole (16) is arranged laterally next to the end of the second pole (17) and both ends lie at approximately the same height of the longitudinal axis of the ignition device (8).

2. Fuel injection system according to Claim 1, **characterized in that** the ends of the first pole (16) and the second pole (17) consist at least partially of a precious metal, in particular a platinum alloy.

3. Fuel injection system according to Claim 1 or 2, **characterized in that** the diameters of the ends of the first pole (16) and the second pole (17) are less than 1 millimetre.

4. Fuel injection system according to one of the preceding claims, **characterized in that** the spacing of the end of the first pole (16) from the end of the second pole (17) is less than 1 millimetre.

5. Fuel injection system according to one of the preceding claims, **characterized in that** the spacing of the second pole (17) from the cone envelope (18) which is formed by the fuel jets (20) is between 0.5 mm and 3 mm.

6. Fuel injection system according to one of the preceding claims, **characterized in that** the fuel jets (20) spread out the fuel fan (11) uniformly, the fuel jets (20) having opening angles (ss) which are, in particular, identical to one another.

7. Fuel injection system according to Claim 6, **characterized in that** the opening angle (ss) is between 25 degrees and 45 degrees.

8. Fuel injection system according to one of the preceding claims, **characterized in that** the ejection openings (13) are widened in a stepped manner to the combustion chamber (6).

9. Fuel injection system according to one of the preceding claims, **characterized in that** the number of ejection openings (13) is at least 4 and at most 12.

10. Fuel injection system according to one of the preceding claims, **characterized in that** the ejection openings (13) are arranged in a multiple-hole plate of the fuel injection valve (2).

11. Fuel injection system according to one of the preceding claims, **characterized in that** the fuel fan (11) has an envelope opening angle (a) of from 70 degrees to 110 degrees.

12. Fuel injection system according to one of the preceding claims, **characterized in that** the fuel fan (11) extends coaxially with respect to the longitudinal axis of the fuel injection valve (2).

13. Fuel injection system according to one of Claims 1 to 11, **characterized in that** the longitudinal axis of the fuel fan (11) encloses an angle which is different from zero with respect to the longitudinal axis of the fuel injection valve (2).

## Revendications

1. Système d'injection de carburant (1) comportant un injecteur de carburant (2) ayant plusieurs orifices d'éjection (13) injectant le carburant dans la chambre de combustion (6) d'un moteur à combustion interne ainsi qu'une installation d'allumage (8) pénétrant dans la chambre de combustion (6) et ayant au moins un premier pôle (16) et un second pôle (17),
**caractérisé en ce que**
les jets de carburant (20) sortant des orifices d'éjection (13) forment en dessous de la zone de l'installation d'allumage (8), un éventail de carburant (11) qui se développe régulièrement suivant une enveloppe conique (18), et
l'extrémité d'au moins un premier pôle (16) est installée latéralement à côté de l'extrémité du second pôle (17) et les deux extrémités se situent sensiblement à la même hauteur de l'axe longitudinal de l'installation d'allumage (8).

2. Système d'injection de carburant selon la revendication 1,
**caractérisé en ce que**
l'extrémité du premier pôle (16) et du second pôle (18) est faite au moins en partie d'un métal noble notamment d'un alliage de platine.

3. Système d'injection de carburant selon l'une quelconque des revendications 14 ou 2,
**caractérisé en ce que**
le diamètre de l'extrémité du premier pôle (16) et celui du second pôle (17) sont inférieurs à 1 millimètre.

4. Système d'injection de carburant selon l'une quelconque des revendications précédentes,
**caractérisé en ce que**
la distance de l'extrémité du premier pôle (16) par rapport à l'extrémité du second pôle (17) est inférieure à 1 millimètre.

5. Système d'injection de carburant selon l'une quelconque des revendications précédentes,
**caractérisé en ce que**
la distance du second pôle (17) par rapport à l'enveloppe conique (18) formée par les jets de carburant (20) est comprise entre 0,5 mm et 3 mm.

6. Système d'injection de carburant selon l'une quelconque des revendications précédentes,
**caractérisé en ce que**
les jets de carburant (20) étalent régulièrement l'éventail de carburant (11), les jets (20) ayant notamment des angles d'ouverture identiques (ss).

7. Système d'injection de carburant selon la revendication 6,
**caractérisé en ce que**
l'angle d'ouverture (ss) est compris entre 25 degrés et 45 degrés.

8. Système d'injection de carburant selon l'une quelconque des revendications précédentes,
**caractérisé en ce que**
les orifices d'éjection (11) ne s'élargissent pas de manière étagée vers la chambre de combustion (6).

9. Système d'injection de carburant selon l'une quelconque des revendications précédentes,
**caractérisé en ce que**
le nombre d'orifices d'éjection (13) est au moins égal à 4 et au plus égal à 12.

10. Système d'injection de carburant selon l'une quelconque des revendications précédentes,
**caractérisé en ce que**
les orifices d'éjection (13) sont prévus dans un disque à plusieurs trous de l'injecteur de carburant (2).

11. Système d'injection de carburant selon l'une quelconque des revendications précédentes,
**caractérisé en ce que**
l'éventail de carburant (11) a un angle d'ouverture (a) de 70 degrés à 110 degrés.

12. Système d'injection de carburant selon l'une quelconque des revendications précédentes,
**caractérisé en ce que**
l'éventail de carburant (11) est coaxial par rapport à l'axe longitudinal de l'injecteur de carburant (2).

13. Système d'injection de carburant selon l'une quelconque des revendications 1 à 11,
**caractérisé en ce que**
l'axe longitudinal de l'éventail de carburant (11) forme un angle différent de zéro par rapport à l'axe longitudinal de l'injecteur de carburant (2).
